# EUROPEAN PATENT APPLICATION

(11) **EP 3 933 614 A1**
(43) Date of publication of application: **05.01.2022**
(21) Application number: 20183959.4
(22) Date of filing: 03.07.2020
(51) Int. Cl.: G06F 16/29

(54) **REVERSE GEOCODING METHOD AND SYSTEM**

(71) Applicant: Global Reaction Company Oy, 00500 Helsinki (FI)
(72) Inventor: Meriluoto, Jere, 00500 Helsinki (FI); Ihanus, Kimmo, 00500 Helsinki (FI); Immonen, Aleksi, 00500 Helsinki (FI)
(74) Representative: Boco IP Oy Ab

(57) **Abstract**

The present invention relates to computer-implemented methods and computer systems for performing reverse geocoding. The method and system of the present invention uses multiple machine learning models that are each trained to perform reverse geocoding for different geographical subdivisions across a hierarchy of such subdivisions. By chaining together multiple machine learning models across different levels of the hierarchy, latitude and longitude can be reverse geocoded with transmitting the latitude and longitude data to a remote sever, improving data security and privacy.

## Description

### Technical Field

The present invention relates to computer-implemented methods and computer systems for performing reverse geocoding.

### Background

Reverse geocoding is the process of obtaining a readable place name from latitude and longitude values. The readable place name could be as broad as continent or country, or as specific as a street address. Conventional reverse geocoding systems, for example the Google Maps Geocoding API, rely on transmitting precise latitude and longitude data to a remote, third party server for processing which raises privacy and data security issues. Furthermore, since all reverse geocoding processes for all request are executed at the remote server, the processing power of the remote server becomes a bottleneck. In practice, this results in requests to the remove geocoding processes being rate limited.

### Summary of the Invention

A first aspect of the present invention is a method for reverse geocoding, the method comprising the following steps:
a) receiving a first machine learning model trained to perform reverse geocoding for identifying a first geographical subdivision;
b) obtaining latitude and longitude data;
c) inputting the latitude and longitude data to the first machine learning model,
d) obtaining first location data from the first machine learning model, wherein the first location data comprises the identified first geographical subdivision within which the latitude and longitude data is located; and
e) transmitting the first location data to a server or requesting the second machine learning model from the server;
f) receiving a second machine learning model trained to perform reverse geocoding for identifying a second geographical subdivision, wherein the second geographical subdivisions are subdivisions of the identified first geographical subdivision;
g) inputting the latitude and longitude data to the second machine learning model; and
h) obtaining second location data from the second machine learning model, wherein the second location data comprises the identified second geographical subdivision within which the latitude and longitude data is located; and

In a first embodiment, the method may further comprise a step i) of transmitting the second location data to the server, and repeating steps f) to i) with one or more further machine learning models configured to identify further geographical subdivisions, wherein each further geographical subdivision is a geographical subdivision of previous repetition's subdivision.

In a second embodiment, step e) may comprise requesting a plurality of further machine learning models, including the second machine learning model and f) may further comprise receiving a plurality of further machine learning models configured to identify further geographical subdivisions, wherein each further geographical subdivision is a geographical subdivision of all possible second geographical subdivisions. In this embodiment, the method further comprises the following steps:
i) inputting the input location data to an appropriate third machine learning model selected from the plurality of plurality of further machine learning models received at step f), wherein the third machine learning model is trained to perform reverse geocoding for identifying a third geographical subdivision, wherein the third geographical subdivisions are subdivisions of the identified second geographical subdivision;
j) obtaining third location data from the third machine learning model, wherein the third location data consists of the identified third geographical subdivision within which the input location data is located.

Step i) above may further comprise removing from memory any of the further machine learning models that are not trained to perform reverse geocoding for identifying geographical subdivisions of the third geographical subdivision.

In all embodiment, obtaining latitude and longitude data in step b) may comprise determining the latitude and longitude of the client device, for example via a GPS receiver in the client device.

Transmitting the first location data to the server device may comprise transmitting a request to the server device for a second machine learning model trained to perform reverse geocoding for identifying a second geographical subdivision, wherein the second geographical subdivisions are subdivisions of the identified first geographical subdivision.

The latitude and longitude of the client may not be transmitted to the server at any point during the execution of the method.

All of the above steps of the method may be performed by a single electronic client device. The client may be a web browser.

Prior to receiving the first machine learning model the method may comprise accessing a service that requests location data.

Prior to inputting latitude and longitude to the machine learning model, the latitude and longitude are converted to a geohash.

The machine learning models may be neural networks, for example feedforward neural networks.

The method may further comprise, prior to step a): training a plurality of machine learning models to perform reverse geocoding, wherein each machine learning model is configured to identify a geographical subdivision, wherein each further geographical subdivision is a geographical subdivision of previous repetition's subdivision and transmitting a first machine learning model of the plurality of machine learning models to a client, and wherein the plurality of machine learning models includes the first and second machine learning models.

A second aspect of the invention relates to a data processing system comprising at least one processor adapted to perform the method described above.

A third aspect of the invention relates to a computer program comprising instructions which, when the program is executed by a computer, cause the computer to carry out the method described above.

A fourth aspect of the invention relates to a computer-readable medium comprising instructions which, when executed by a computer, cause the computer to carry out the method described above.

### Brief Description of the Drawings

Figure 1 shows an example of a client-server system on which the method of the present invention may operate.
Figure 2 shows a hierarchy of machine learning models for reverse geocoding according to the present invention.
Figure 3 shows a flowchart of a first method of the present invention.
Figure 4 shows a flowchart of a second method of present invention.

### Detailed Description

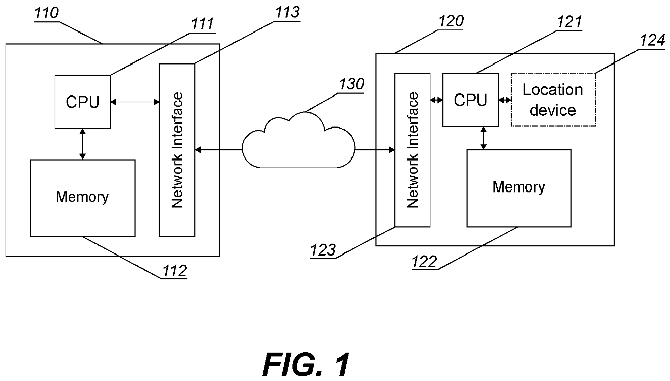

Figure 1 shows an overview of a client-server system 100. The system 100 includes at least one server 110 and at least one client device 120. The server 110 includes a CPU 111 and memory 112, e.g. short-term memory such as RAM and long-term memory such as hard disk or solid-state drives. The server 100 also includes a network interface 113 through which the server 110 can communicate with a network 130, such as the internet, and client 120. Client 120 also includes a CPU 121 and memory 122, e.g. short-term memory such as RAM and long-term memory such as hard disk or solid-state drives, and the network interface 123 through enables the client 120 to communicate with network 130 and server 110. The client may also include a location device 124, such as a GPS system, for determining the latitude and longitude of the client device. The system typically involves multiple clients 120 served by a smaller number of servers 110.

The present invention enables reverse geocoding to performed by a client device 120, rather than by the server 110, by transmitting a number of machine learning models that have been trained to perform reverse geocoding from the server 110 to the client device 120. Each machine learning model is trained to perform reverse geocoding within a specific geographic subdivision in order to identify the subsequent level of geographic subdivision within which the input latitude and longitude are located. For example, one machine learning model may be trained to identify which state or county that the location indicated by the input latitude and longitude is within a specific country, while another machine learning model is trained to identify the state or county within another country.

The machine learning models are preferably neural networks, specifically feed-forward neural networks, but other neural network architectures and other types of machine learning models, such as random forests or any other machine learning model capable of multiclass classification.

In general, the land surface or the entire surface of the Earth is split into a hierarchy of geographical subdivisions, with different branches for each subdivision. For example, at the top level, the surface of the Earth may be divided into continents. Each continent may be divided into countries or time zones. Each country may be divided into states, or counties, and each state or country subsequently divided into municipalities and so on.

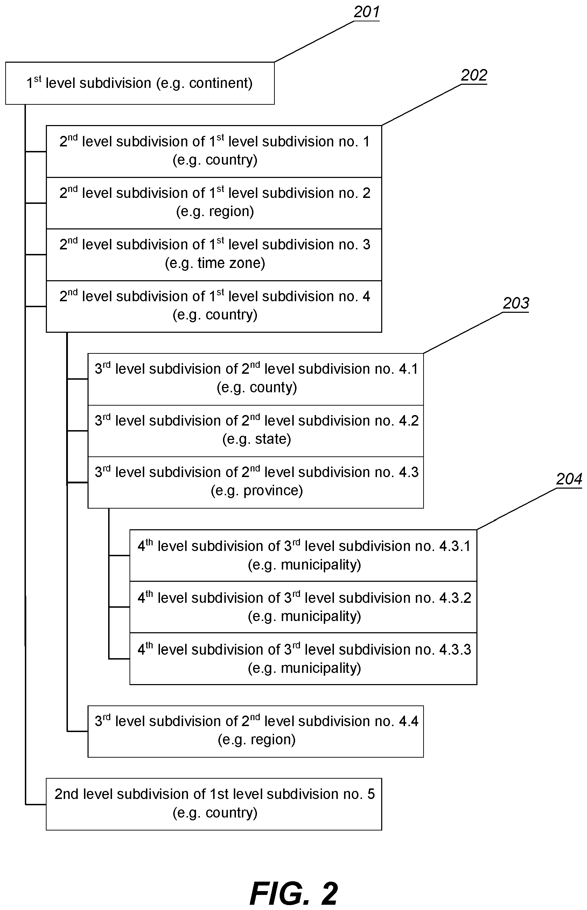

The machine learning models of the present invention mirror this hierarchy, as shown in the example of Figure 2. At the 1^{st} level of subdivision 201, the surface of the Earth is divided in continents. A single machine learning model is trained to identify the continent within which the location indicated by latitude and longitude data falls. At the 2^{nd} level subdivision 202, each continent is divided into subdivisions according to, for example, countries, regions, or time zones. For each continent, i.e. for each 1^{st} level subdivision, a single machine learning model is trained to identify the relevant 2^{nd} level subdivision. At the 3^{rd} level 203, each country or time zone is split into counties, states or regions etc. For every country or time zone or other 2^{nd} level subdivision, there is a machine learning model trained to identify the relevant 3^{rd} level subdivision within which the latitude and longitude data is located. Similarly, for the 4^{th} level subdivision 204, at which each 3^{rd} level subdivision is further subdivided into, for example, municipalities or postal areas, there is a machine learning model trained to identify the relevant 3rd level subdivision within which the latitude and longitude data is located.

This hierarchy of geographical subdivisions and corresponding machine learning models, as shown in Figure 2, can extend as far as is required for the application, for example all the way to a machine learning model for each street, which is trained to identify the closest house or building number to the input latitude and longitude data. Equally, where such precision is not required and only an indication of country or nation state is required, the hierarchy may only include 2 or 3 levels.

In this way, by chaining together these machine learning models, each adapted to a specific geographical region, the reverse geocoding process can be performed accurately by the client device.

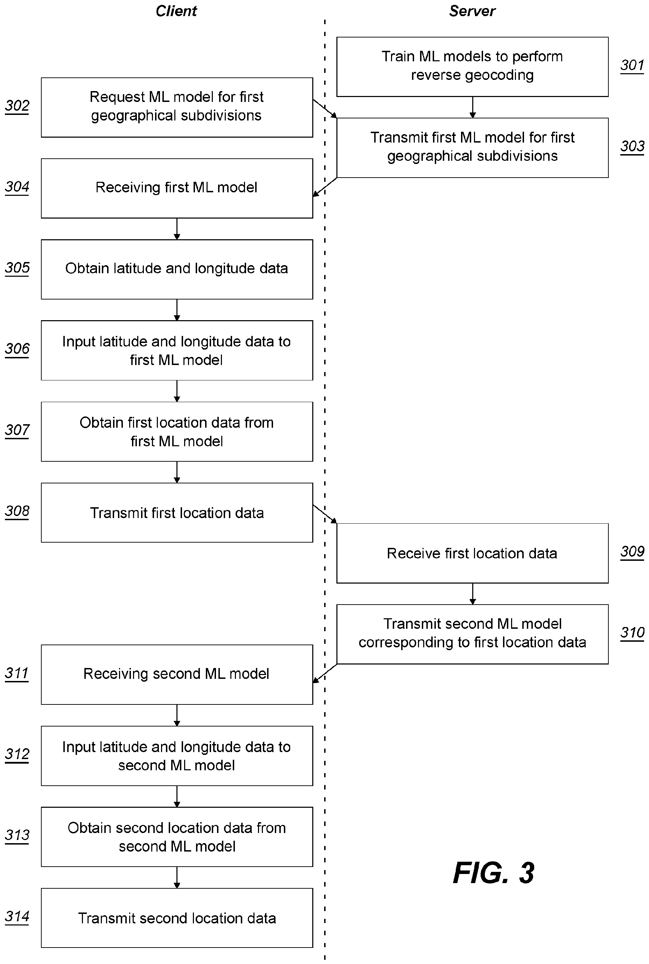

Figure 3 shows a flowchart of a first method in which the machine learning models described above are employed. The steps performed by the client device 120 are shown on the left of the flow chart, and steps performed by the server 110 are shown on the right.

At step 301, training of the neural networks to perform the functions described above is performed. Any suitable process for training each machine learning model to identify the relevant subdivisions may be used. As an example, the training may be performed as follows:
1. Large quantities of labelled geolocation data, i.e. associated pairs of latitude/longitude coordinates and readable location information, are processed into a consistent and machine-readable form.
2. The processed labelled geolocation data is sorted into the hierarchy of geographical subdivisions based on the readable location information, i.e. by continent, country, city etc.
3. The sorted, processed labelled geolocation data is used to train the machine learning model for the specific geographical subdivision, e.g. using backpropagation, where the machine learning model is a feed-forward neural network, or any other suitable technique known in the art.

The training is performed at the server 110 or at another device where it is subsequently transmitted to the server 110 ready to be transmitted to a client 120 subsequently.

At step 302, the client device 120 requests the first machine learning model for identifying the first geographical subdivisions from the server 110. The request may be triggered by the use of an application or service on the client device that requires location information. The request may be an explicit request for the first machine learning model or may be a more generic request to begin the reverse geocoding process.

At step 303, the server 110 receives the request from the client 120 and transmits the first machine learning model, which has been trained to identify the 1^{st} level geographical subdivision within which latitude and longitude data is located, to the client 120. At step 304, the first machine learning model is received by the client 120.

At step 305, latitude and longitude data is obtained by the client 120. The latitude and longitude data may be obtained from a location device 124, for example via GPS or any other positioning system that can provide the latitude and longitude of the client device 120, or may be input to the client device, e.g. via a form. Obtaining the latitude and longitude data at step 305 may take place at any time before step 306, where it is first used, and is not necessarily performed after receiving the first machine learning model from the server 110 at step 304.

At step 306, the latitude and longitude data is input to the first machine learning model and, at step 307, first location data is obtained from the first machine learning model. The first location data indicates the first level geographical subdivision within which the input latitude and longitude data is located.

At step 308, the first location data is transmitted from the client device 120 to the server 110. Alternatively, the client device 120 may request the second machine learning model, i.e. the machine learning model associated with the identified first level geographical subdivision, without explicitly transmitting the first location data, i.e. the output of the first machine learning model.

At step 309, the server 110 receives the request from the client device and, in response, transmits the second machine learning model, i.e. the machine learning model associated with the identified first level geographical subdivision, to the client device 120 at step 310.

At step 311, the client device 120 receives the second machine learning model from the server 110. At step 312, the latitude and longitude data obtained at step 305 are input to the second machine learning model, and at step 313 the second location data, i.e. the second level geographical subdivision in which the latitude and longitude data is located, is obtained from the second machine learning model.

At step 314, the process may end by transmitting the second location data to the server 110. This may be used where the server 110 is also running an application that requires the location of the user to the degree of the second level of geographical subdivisions. Alternatively, where a locally running application on the client device 120 requires the same information, the second location data may not be transmitted to the server 110 at all, instead simply being provided to the locally running application.

Where further accuracy of the location is required, i.e. where further geographical subdivisions within which the latitude and longitude is located is needed, steps 308 to 313 may be repeated as many times as necessary with subsequent machine learning models and geographical subdivisions. Only once the reverse geocoded location is known with the required accuracy does the process end.

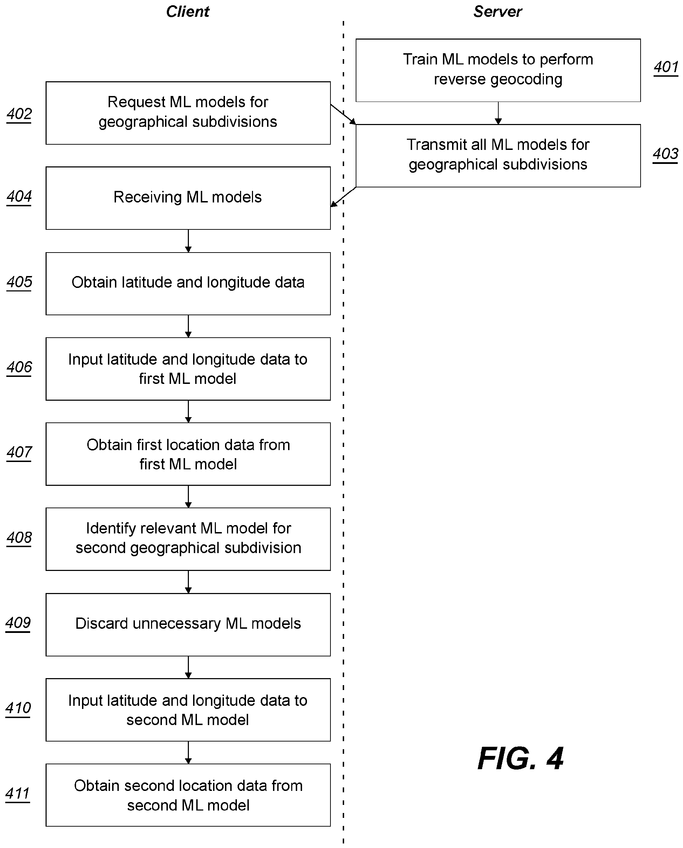

An alternative process employing the machine learning models described above with respect to Figure 2 is shown in Figure 4. As in Figure 3, the steps performed by the client 120 are shown on the left of the flow diagram and the steps performed by the server are shown on the right.

At step 401, the machine learning models are trained in the same manner as described above with respect to Figure 3 and step 301. At step 402, the client 120 requests the machine learning models corresponding to the geographical subdivisions from the server 110. At step 403, the sever 110 receives the request from the client 120 and transmits all of the machine learning models for the geographical subdivisions to the client 120.

The request sent by the client 120 at step 402 may specify a maximum level of the geographical subdivisions for which machine learning models should be transmitted to the client. For example, if the client only requires the latitude and longitude to be reverse geocoded to provide an indication of the country, only the machine learning models that are trained to identify countries and the higher-level geographical subdivisions will be sent to the client.

Alternatively, the process depicted in Figure 4 may take follow on from step 307 or 313 of the process shown in Figure 3 instead of continuing to request only the specific machine learning model for the smallest identified subdivision. In this way, it is possible to withhold information from the server about which of the smallest geographical subdivisions are identified, effectively preventing transmission of the precise location to the server 110. In this case, only the machine learning models for unidentified subdivisions of the smallest already-identified geographical subdivision will be transmitted at step 403.

At step 404, the client 120 receives the machine learning models from the server 110, and at step 405, the client 120 obtains the latitude and longitude data, e.g. from a location sub-system 124 of the client device. As described above with respect to step 305 in Figure 3, the latitude and longitude data are not necessarily obtained after the machine learning models are received from the server 110, but may be obtained at any point before their use is required, i.e. before step 406.

At step 406, the latitude and longitude data are input to the first machine learning model, i.e. the machine learning model which has been trained to identify the highest-level geographical subdivision within which the latitude and longitude are located. If the process of Figure 4 begins after one or more geographical subdivisions have already been identified by the process of Figure 3, then the first machine learning model of step 406 is the machine learning model which has been trained to identify the highest-level geographical subdivision of the smallest geographical subdivision that has already been identified.

At step 407, the first location data, indicating which geographical subdivision the latitude and longitude data are located in, is obtained from the first machine learning model and at step 408, the relevant machine learning model for the geographical subdivision identified at step 407 is determined.

At step 409, any unnecessary machine learning models that were received from the server 110 may be discarded from the memory 122 of the client device 120. This includes the machine learning models for the geographical subdivisions at the level of the first machine learning model other than the geographical subdivision identified at step 407 and all of the machine learning models relating to geographical subdivisions of those subdivisions. Alternatively, the unnecessary machine learning models may be retained, e.g. for performing multiple reverse geocoding processes in quick succession without required repeated transmission of the machine learning models from the server 110. Thus, step 409 is optional.

At step 410, the latitude and longitude data is input to the second machine learning model and second location data is obtained from the second machine learning model at step 411. The process of Figure 4 may end here if the latitude and longitude have been reverse geocoded with enough accuracy already by the second machine learning model. However, where further accuracy is needed, steps 408 to 411 may be repeated as many times as necessary with lower-level geographical subdivisions in order to reverse geocode the latitude and longitude more accurately.

In neither of the methods depicted in Figures 3 and 4 is the input latitude and longitude transmitted to the server 110, thus the location data cannot be intercepted in transmission or, where the server 110 is controlled by a third party to the controller of the client device 120, the precise location data is not transmitted to a third party.

The degree to which the reverse geocoded location is known or can be deduced by the server 110 or the party controlling the server 110 depends, in method of Figure 3, on how accurate the reverse geocoding needs to be. Thus, in many cases where reverse geocoding is used only to determine the country or time zone in which a device is located, only the very broad location of the device is transmitted to the server.

Where a combination of the methods of Figures 3 and 4 is used, a higher level of accuracy of the reverse geocoded location can be determined by the client device while only revealing the broad location to the server 110.

When the method of Figure 4 is used, potentially no information at all about the location is provided to the server 110.

Furthermore, since the computationally intensive reverse geocoding process is offloaded to the client device 120 - in both methods the server 110 only responds to the requests for the machine learning models, which may simply be HTTP/HTTPS requests - the server 110 is not overwhelmed by simultaneous reverse geocoding processes required by multiple clients 120.

The method at the client device may be implemented in a web browser, in which case the reverse geocoding process may be triggered by the user of the client device visiting a particular website and using a particular feature of the site that requires location information. In this case, the method may be implemented in a suitable programming language such a JavaScript, for example using the Brain.js library for neural networks or other suitable libraries for other machine learning models.

## Claims

1. A method for reverse geocoding, the method comprising:
a) receiving a first machine learning model trained to perform reverse geocoding for identifying a first geographical subdivision;
b) obtaining latitude and longitude data;
c) inputting the latitude and longitude data to the first machine learning model,
d) obtaining first location data from the first machine learning model,
wherein the first location data comprises the identified first geographical subdivision within which the latitude and longitude data is located; and
e) transmitting the first location data to a server or requesting the second machine learning model from the server;
f) receiving a second machine learning model trained to perform reverse geocoding for identifying a second geographical subdivision, wherein the second geographical subdivisions are subdivisions of the identified first geographical subdivision;
g) inputting the latitude and longitude data to the second machine learning model;
h) obtaining second location data from the second machine learning model, wherein the second location data comprises the identified second geographical subdivision within which the latitude and longitude data is located; and

2. The method of claim 1, further comprising:
i) transmitting the second location data to the server;
and wherein the method further comprises repeating steps f) to i) with one or more further machine learning models configured to identify further geographical subdivisions, wherein each further geographical subdivision is a geographical subdivision of previous repetition's subdivision.

3. The method of claim 1, wherein step e) comprises requesting a plurality of further machine learning models, including the second machine learning model and step f) further comprises receiving a plurality of further machine learning models configured to identify further geographical subdivisions, wherein each further geographical subdivision is a geographical subdivision of all possible second geographical subdivisions.

4. The method of claim 3, wherein the method further comprises:
i) inputting the input location data to an appropriate third machine learning model selected from the plurality of plurality of further machine learning models received at step f), wherein the third machine learning model is trained to perform reverse geocoding for identifying a third geographical subdivision, wherein the third geographical subdivisions are subdivisions of the identified second geographical subdivision;
j) obtaining third location data from the third machine learning model,
wherein the third location data consists of the identified third geographical subdivision within which the input location data is located.
wherein step i) optionally further comprises removing from memory any of the further machine learning models that are not trained to perform reverse geocoding for identifying geographical subdivisions of the third geographical subdivision.

5. The method of any preceding claim, wherein obtaining latitude and longitude data in step b) comprises determining the latitude and longitude of a client device.

6. The method of any preceding claim, wherein transmitting the first location data to the server device comprises transmitting a request to the server device for a second machine learning model that has been trained to perform reverse geocoding for identifying a second geographical subdivision, wherein the second geographical subdivisions are subdivisions of the identified first geographical subdivision.

7. The method of any preceding claim, wherein the latitude and longitude of the client are not transmitted to the server.

8. The method of any preceding claim, wherein the steps of the method are performed by a web browser.

9. The method of any preceding claim, wherein prior to receiving the first machine learning model the method comprises accessing a service that requests location data.

10. The method of any preceding claim, wherein prior to inputting latitude and longitude to the machine learning model, the latitude and longitude are converted to a geohash.

11. The method of any preceding claim, wherein the machine learning model is a neural network, preferably a feedforward neural network.

12. The method of any preceding claim, wherein the method further comprises prior to step a): training a plurality of machine learning models to perform reverse geocoding, wherein each machine learning model is configured to identify a geographical subdivision, wherein each further geographical subdivision is a geographical subdivision of previous repetition's subdivision and transmitting a first machine learning model of the plurality of machine learning models to a client, and wherein the plurality of machine learning models includes the first and second machine learning models.

13. A data processing system comprising at least one processor adapted to perform the method of any preceding claim.

14. A computer program comprising instructions which, when the program is executed by a computer, cause the computer to carry out the method of any one of claims 1 to 12.

15. A computer-readable medium comprising instructions which, when executed by a computer, cause the computer to carry out the method of any one of claims 1 to 12.
